# NEUE EUROPÄISCHE PATENTSCHRIFT

(11) **EP 2 649 115 B2**
(45) Veröffentlichungstag und Bekanntmachung des Hinweises auf die Entscheidung über den Einspruch: **04.07.2018**
(45) Hinweis auf die Patenterteilung: 11.03.2015
(21) Anmeldenummer: 11791558.7
(22) Anmeldetag: 06.12.2011
(51) Int. Cl.: C08J 3/03, C08K 3/34, C08J 9/35, C08G 18/36, C08G 18/48, C08G 18/76

(54) **POLYURETHAN-VERBUNDMATERIAL**
POLYURETHANE COMPOSITE
MATÉRIAU COMPOSITE DE POLYURÉTHANE

(30) Priorität: 07.12.2010 EP 10194004
(43) Veröffentlichungstag der Anmeldung: 16.10.2013
(73) Patentinhaber: BASF SE, 67056 Ludwigshafen am Rhein (DE)
(72) Erfinder: ELING, Berend, 49448 Lemförde (DE); AUFFARTH, Stefan, 49451 Holdorf (DE); MC DONNELL, Shane, Oliver, 81673 München (DE)
(86) Internationale Anmeldenummer: PCT/EP2011/071877
(87) Internationale Veröffentlichungsnummer: WO 2012/076506

(56) Entgegenhaltungen:
- EP-B1- 0 223 380
- EP-B1- 0 340 707
- EP-B1- 0 741 153
- WO-A1-2010/129200
- WO-A1-2012/000184
- WO-A1-2012/062796
- WO-A1-2012/072496
- DE-A1- 2 325 090
- DE-A1- 2 359 606
- DE-A1- 2 602 985
- DE-A1- 10 008 150
- GB-A- 1 445 940
- GB-A- 1 523 601
- GB-A- 1 528 612
- US-A- 3 150 109
- US-A- 3 965 051
- US-A- 3 975 316
- US-A- 4 273 908
- US-A- 4 954 327
- US-A- 5 656 195
- US-A- 6 080 475
- US-A1- 2003 215 640
- US-A1- 2007 088 103
- US-A1- 2009 029 147
- US-A1- 2009 304 938
- US-A1- 2010 144 962
- US-B1- 6 420 034

## Beschreibung

Die Erfindung betrifft ein Verbundmaterial enthaltend einen Binder und ein Aerogel oder Aerosil, ein Verfahren und eine Zusammensetzung zur Herstellung des Verbundmaterials, sowie die Verwendung des Verbundmaterials.

Aerogele sind hochporöse Festkörper, bei denen der überwiegende Teil des Volumens aus Poren besteht. Die Aerogele können beispielsweise auf Silikaten, Metalloxiden, aber auch auf Kunststoff, Kohlenstoff, oder anorganisch-organischen Hybriden basieren. Die Poren der Aerogele weisen einen Durchmesser auf, der im Nanometer-Bereich liegt. Infolge des großen Porenvolumens und schmalen Kanal-Strukturen eignen sich die Aerogele insbesondere als Dämmmaterialien mit hervorragenden Wärmedämmungseigenschaften bei geringer Dichte. Die Aerogele liegen zunächst als Partikel, Pulver, Granulate oder Monolithe vor und können unter Verwendung von Bindern einer Formgebung unterworfen und beispielsweise zu Platten gepresst werden.

Der Formgebungsprozess des Aerogels wird während des Sol-Gel-Übergangs abgeschlossen. Nach Ausbildung der festen Gelstruktur kann die äußere Form nur noch durch Zerkleinern, beispielsweise Mahlen, verändert werden. Unter dem Begriff Aerogel werden im Rahmen der vorliegenden Erfindung auch Xerogele und Kryogele verstanden.

Aus der EP-A-0 340 707 sind Dämmstoffe der Dichte 0,1 bis 0,4 g/cm³ mit gutem Wärmedämmvermögen und ausreichend hoher Druckfestigkeit bekannt, welche durch Verkleben von Silica-Aerogel-Partikeln mit einem anorganischen oder organischen Bindemittel erhalten werden. Als geeignete anorganische Bindemittel werden beispielhaft Zement, Gips, Kalk und/oder Wasserglas genannt.

Aus der EP 489 319 A2 sind Verbundschaumstoffe auf Basis von Silica-Aerogel-Partikeln und eines Styrol-Polymerisat-Schaumstoffes bekannt. Aus der US-A-6121336 ist bekannt, die Eigenschaften von Polyurethanschäumen durch Einarbeitung von Silica-Aerogelen zu verbessern. Aus der DE 44 41 567 A1 ist bekannt, in Verbundmaterialien aus Aerogelen und anorganischen Bindemitteln Teilchendurchmesser der Aerogel-Partikel kleiner als 0,5 mm zu wählen. Aus der EP 672 635 A1 ist bekannt, in Formkörpern aus Silica-Aerogelen und Bindemitteln zusätzlich Schichtsilikate oder Tonminerale einzusetzen. Aus der US-A-6143400 ist weiterhin bekannt, in Verbundmaterialien aus Aerogel-Partikeln und einem Klebstoff Aerogel-Partikel mit Durchmessern kleiner als 0,5 mm zu verwenden. Aus der DE 105 335 64 sind Verbundmaterialien, enthaltend Aerogel-Partikel, Bindemittel und ein Fasermittel, bekannt. Aus der WO 2007/011988 A2 sind Zusammensetzungen mit so genannten Hybrid-Aerogel-Partikeln und einem Binder bekannt, worin die Aerogel-Partikel kovalent mit dem Binder verbunden sein können.

Aus der EP 667370 A2 ist ein Verbundschaumstoff enthaltend 10 bis 90 Vol.-% SiO₂ Aerogel-Partikel und 90 bis 10 Vol.% eines vorzugsweise Polyurethan- und/oder Polyolefinschaums bekannt. Dieser wird dadurch hergestellt, dass man eine Schüttung aus den Aerogel-Partikeln mit dem Kunststoffschaum umschäumt.

Aus der US 2009/0029147 A1 ist ein Aerogel Polyurethanverbundmaterial bekannt, welches dadurch hergestellt wird, dass ein offenzelliger Polyurethanschaum zunächst hergestellt wird und ein Aerogelvorläufer auf Basis von hydrolysiertem Tetraethoxysilikat, Wasser und Ethanol zu dem Polyurethanschaum gegeben wird.

Für die Herstellung derartiger Formkörper ist jedoch häufig die Verwendung hoher Bindemittelgehalte notwendig. Darüber hinaus sind viele anwendungstechnische Eigenschaften wie beispielsweise Wärmeleitfähigkeit oder Bruchfestigkeit noch verbesserungsbedürftig. Probleme ergeben sich häufig auch bei der Herstellung der Formkörper. Zahlreiche organische Bindemittel sind aufgrund ihrer hohen Viskosität nicht verwendbar. Die Verwendung niedrigviskoser Dispersionen erfordert hierbei häufig eine zu große Verdünnung mit wässrigen Lösungsmitteln, was den Nachteil hat, dass das in den Dispersionen vorliegende Bindemittel, infolge fehlender Benetzung der Aerogel-Oberfläche, keine Verbindung mit den in der Regel hydrophoben Silica-Aerogel-Partikeln eingeht.

Aufgabe der Erfindung war es daher, Verbundmaterialien bereitzustellen, die bei relativ geringem Bindemittelanteil eine verbesserte, reduzierte Wärmeleitfähigkeit und eine niedrige Dichte aufweisen können. Die Verbundmaterialien sollen sich außerdem, beispielsweise durch verbesserte Anwendbarkeit von organischen Bindemitteln, auf einfache Weise herstellen lassen.

Insbesondere war es Aufgabe der Erfindung, Formkörper bereitzustellen, die bei geringem Bindemittelanteil eine verbesserte, reduzierte Wärmeleitfähigkeit, mechanische Stabilität und eine niedrige Dichte aufweisen.

Die Erfindung betrifft ein Verbundmaterial, enthaltend einen Binder und ein Aerogel oder Aerosil, dadurch gekennzeichnet, dass der Binder das Reaktionsprodukt eines wasseremulgierbaren Polyurethan-basierten Prepolymers mit einem wässrigen System, insbesondere Wasser, ist, gemäß Anspruch 1. Das wässrige System besteht in einer bevorzugten Ausführungsform aus Wasser. Es können aber weitere Bestandteile enthalten sein, insbesondere
- mit Isocyanaten nicht reagierende Zusätze,
- mit Isocyanaten reagierende Zusätze, insbesondere Polyole und Polyamine.

Die Erfindung betrifft weiterhin ein Verfahren zur Herstellung eines Verbundmaterials, dadurch gekennzeichnet, dass man ein Prepolymer auf Basis eines Isocyanats und einer Isocyanat-reaktiven Verbindung P, welches Isocyanatgruppen aufweist, unter Zugabe von Wasser mit einem Aerogel oder Aerosil, vermischt unter Bedingungen, die eine Reaktion des Prepolymers mit dem zugesetzten Wasser gewährleisten.

In einer bevorzugten Ausführungsform liegen die Partikel homogen verteilt im Verbundmaterial vor.

Die Erfindung betrifft weiterhin eine Zusammensetzung zur Herstellung eines erfindungsgemäßen Verbundmaterials, enthaltend ein Aerogel oder Aerosil, ein Isocyanat-gruppen-haltiges Prepolymer und Wasser, wobei diese Bestandteile auch räumlich getrennt in einem Kit vorliegen können.

Soweit nicht anders ausgeführt, werden im Rahmen der vorliegenden Erfindung die verwendeten Begriffe wie folgt definiert und die genannten Messgrößen wie folgt bestimmt:
- Partikel:: Als Partikel werden Teilchen bezeichnet, die entweder monolithisch sind, d. h. aus einem Stück bestehen, oder aber die im Wesentlichen Partikel mit einem Durchmesser kleiner als der des Teilchens enthalten, die gegebenenfalls durch ein geeignetes Bindemittel verbunden sind, oder durch Pressen zu größeren Teilchen zusammengefügt sind.
- Porosität:: Verhältnis von Hohlraumvolumen zu Gesamtvolumen, gemessen gemäß Stickstoffadsorption und desorption (< 100 nm) und Quecksilberporosimetrie (> 100 nm)
- Hydrophob:: Unter hydrophoben Stoffen werden im Rahmen der vorliegenden Stoffe derartige Stoffe verstanden, die bei Raumtemperatur einen Kontaktwinkel von mehr als 90° gegenüber Wasser aufweisen.
- Nanoporös:: Unter nanoporös wird verstanden, dass die Poren der Partikel eine Größe von 0,1 bis 500 nm, insbesondere < 200 nm, besonders bevorzugt < 100 nm (d50) aufweisen und die Porosität von 50 bis 99, insbesondere 70 bis 99, besonders bevorzugt 80 bis 99 beträgt.
- Granulär:: Granulär bedeutet, dass die Teilchen in einer Größe von 0,1 µm bis 100 mm, bevorzugt von 1 µm bis 30 mm (d50) vorliegen und das Verhältnis der längsten Raumachse zur kürzesten Raumachse der Partikel bevorzugt 4:1 bis 1:1 beträgt.
- Pyrogene Kieselsäure:: Pyrogene Kieselsäure besteht vorzugsweise aus mikroskopischen Tropfen amorphen Siliziumdioxids (Silicas), die zu verzweigten, kettenähnlichen, dreidimensionalen Sekundärpartikeln verschmolzen sind, die zu Tertiärpartikeln agglomerieren. Das resultierende Pulver weist eine extrem niedrige Schüttdichte und eine hohe Oberfläche auf. Die Primärpartikel weisen eine Größe von 5 - 50 nm (d50) auf. Sie sind nicht porös und haben eine Oberfläche von 50 - 600 m²/g und eine Dichte von 2,2 g/cm³. Pyrogene Kieselsäure wird durch Flammenpyrolyse von Siliciumtetrachlorid oder aus in einem elektrischen Lichtbogen bei 3.000 °C verdampftem Quarzsand hergestellt.
- Molekulargewicht:: Die Molekulargewichtsangaben beziehen sich auf das Zahlenmittel Mn, in g/mol, falls nicht anders angegeben.
- Prepolymer: Ein Isocyanatgruppen-haltiges Polymer, erhältlich durch Reaktion eines Isocyanats mit einer Isocyanat-reaktiven Verbindung P, insbesondere einer Verbindung mit einem aciden H-Atom, besonders bevorzugt einem Polyol, wobei das Isocyanat im Überschuss eingesetzt wird, so dass das Prepolymer freie Isocyanat-Gruppen aufweist.
- d₅₀-Wert: Korngröße, bei der 50 % der Partikel größer und 50 % kleiner sind als der angegebene Wert.
- Wässriges Alkali-Silikat: Das wässrige Silikat der gegenwärtigen Erfindung ist vorzugsweise ein Alkali- oder Ammoniumsilikat, bevorzugt Ammonium-, Lithium-, Natrium- oder Kalium-Wasserglas, oder Kombinationen daraus mit einem (Silica) Modul, welches durch das molare Verhältnis von SiO₂ zu M₂O von 4,0 - 0,2 definiert wird, bevorzugt 4,0 - 1,0, wobei M für ein mono-valentes Kation steht. Das wässrige Silikat hat einen Feststoffanteil von 10 - 70 Gewichts-%, bevorzugt 30 - 55 Gewichts-% und/oder einen Silikat-Anteil, berechnet als SiO₂, von 12 - 32 Gewichts-%, bevorzugt 18 - 32 Gewichts-%. Natrium- und Kalium-Wasserglas sind besonders bevorzugt. Die Wasserglas-Viskosität sollte im Bereich von 0,2 - 1,0 Pa*s liegen. Höhere Viskositäten sollten durch die Zugabe einer geeigneten wässrigen Alkali-Lösung gesenkt werden.

Im Folgenden werden bevorzugte erfindungsgemäß zu verwendende Komponenten angegeben, deren Kombination, auch wenn sie nicht speziell angegeben ist, als zur Erfindung gehörig zu betrachten ist.

### Isocyanate

Als organische Isocyanate können allgemein bekannte aromatische, aliphatische, cycloaliphatische und/oder araliphatische Isocyanate, bevorzugt Diisocyanate eingesetzt werden, beispielsweise 2,2'-, 2,4'- und/oder 4,4'-Diphenyl-methandiisocyanat (MDI), polymeres MDI, 1,5-Naphthylendiisocyanat (NDI), 2,4- und/oder 2,6-Toluylendiisocyanat (TDI), 3,3'-Dimethyldiphenyl-diisocyanat, 1,2-Diphenylethandiisocyanat und/oder Phenylendiisocyanat, ,Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanatomethyl-cyclohexan (Isophoron-Diisocyanat, IPDI), 1,4- und/oder 1,3-Bis(isocyanatomethyl)cyclohexan (HXDI), 1,4-Cyclohexan-diisocyanat, 1-Methyl-2,4- und/oder -2,6-cyclohexan-diisocyanat und/oder 4,4'-, 2,4'-und 2,2'-Dicyclohexylmethan-diisocyanat (H12MDI), bevorzugt 2,2'-, 2,4'- und/oder 4,4'-Diphenylmethandiisocyanat (MDI), polymeres MDI, 1,5-Naphthylendiisocyanat (NDI), 2,4- und/oder 2,6-Toluylendiisocyanat (TDI), Hexamethylendiisocyanat (HDI), 4,4'-, 2,4'- und 2,2'-Dicyclohexylmethan-diisocyanat (H12MDI) und/oder IPDI, insbesondere 4,4'- MDI und/oder Hexamethylendiisocyanat.

Besonders bevorzugte Isocyanate sind Diphenylmethandiisocyanate (MDI) insbesondere polymere MDI, insbesondere mit einer Viskosität von 10 - 10.000 mPas, insbesondere von 20 - 5.000 mPas gemessen bei 25 °C gemäß DIN53018. Ganz besonders bevorzugte Typen haben eine Viskosität zwischen 50 und 1.000 mPas.

Besonders bevorzugte Isocyanate sind HDI und IPDI, vor allem niederflüchtige Derivate von diesen Isocyanaten wie Trimer, Dimer, Biuret und Allophanat.

### Isocyanat-reaktive Verbindungen

Als gegenüber Isocyanaten reaktive Verbindungen (P) werden folgende gegenüber Isocyanaten reaktive Verbindungen eingesetzt: Polyesterole, Polyetherole, Polyetheramine und/oder Polycarbonatdiole, die üblicherweise auch unter dem Begriff "Polyole" zusammengefasst werden, mit einem zahlenmittleren Molekulargewicht (Mn) von 106 bis 12.000 g/mol, bevorzugt 100 bis 10.000 g/mol, insbesondere 200 bis 8.000 g/mol und einem Hydroxyl-Wert von 14 bis 1.839 mg KOH/g, insbesondere von 28 bis 600 mg KOH/g und einer Funktionalität von 2 bis 8, bevorzugt 2 bis 3, insbesondere 2.

In einer besonders bevorzugten Ausführungsform werden als Isocyanat-reaktive Verbindungen (P) Polyalkylenglykole, insbesondere Polytetrahydrofuran (PTHF), Polybutylenglykole, Polypropylenglykole, Polyethylenglykole und Copolymere, hergestellt durch Anlagerung von Ethylenoxid, Butylenoxid und Propylenoxid, verwendet. Die Copolymere können eine Block- oder Mischstruktur aufweisen. Besonders bevorzugte Polypropylenglykole und Polybutylenglykole haben ein Molekulargewicht von 400 bis 10.000 g/mol insbesondere von 600 bis 8.000 g/mol und bevorzugt einer Funktionalität von 2 bis 8, besonders bevorzugt 2 bis 3

Besonders bevorzugte Polyethylenglykole haben ein Molekulargewicht von insbesondere 200 bis 6.000 g/mol und bevorzugt eine Funktionalität von 2 bis 8, besonders bevorzugt 2 bis 3.

In einer weiteren Ausführungsform der Erfindung werden in Wasser emulgierbare Prepolymere verwendet, die mit polyethylenoxidhaltigen Polymeren versetzt sind. Dazu können die obengenannten Polyethylenglykole verwendet werden. Zusätzlich können auch Polyethylenoxid-Polymere genommen werden mit folgender Struktur:

RO(CH₂-CH₂O)ₙH

worin bedeuten
- R: ein Alkylradikal mit insbesondere 1 bis 4 C-Atomen
- n: eine Zahl von 3 bis 50.

Typische Beispiele solcher Komponenten sind Methoxypolyethylenglykole mit einem Molekulargewicht von 200 bis 2.000 g/mol, bevorzugt von 300 bis 1.000 g/mol. Prepolymere mit Alkylpolyethylenglykol sind bekannt aus GB 1528612.

In einer weiteren Ausführungsform der Erfindung wird die Emulgierbarkeit der Isocyanat-basierten Prepolymere verbessert durch Modifizierung der Prepolymere mit ionisierbaren Gruppen wie Aminosilanen, siehe WO 2010/112155 A2 und/oder ionischen Gruppen wie Carboxylaten, Phosphaten und Sulfaten, siehe DE-A-2 359 606. Dieser Ansatz ist besonders geeignet, wenn wässrige Alkalisilikate und/oder kolloidale Kieselsole verwendet werden.

Die mit den erfindungsgemäß zu verwendenden Isocyanat-reaktiven Verbindungen P umgesetzten Isocyanate sind in Wasser dispergierbar, insbesondere bei Verwendung von Polyethylenglykolen mit einem Molekulargewicht von 106 bis 4.000 g/mol oder Polyethylenglykolen mit einem Molekulargewicht von 106 bis 4.000 g/mol und Alkylpolyethylenglykolen mit einem Molekulargewicht von 200 bis 2.000 g/mol.

In einer weiteren Ausführungsform der Erfindung wird die Emulgierbarkeit der Isocyanat-basierten Prepolymere durch die Verwendung von Tensiden und/oder anderen oberflächenaktiven Substanzen erreicht. Solche oberflächenaktive Substanzen beinhalten eine breite Palette an Benetzungsmitteln und Tensiden und wirken so, dass sie die Dispergierbarkeit des Polyurethanprepolymers in Wasser verbessern, wie beschrieben im Handbook of Industrial Surfactants, 4. Edition, Seiten 6279-6331. Emulsifizierungshilfsmittel schließen folgende ein, sind aber nicht auf diese beschränkt: Polyalkoxylate, Polyalkenglykole, Polyharnstoffe, Polyglykoside und Fettalkoholester.

Zur Herstellung von Dispersionen des Prepolymers wird in einer bevorzugten Ausführungsform Wasser verwendet, weil es die Viskosität der Prepolymere drastisch reduziert, nicht in die Poren des Aerogels dringt und mit Isocyanat reagiert unter Bildung von Harnstoff. Gegebenenfalls kann man statt Wasser auch Wasserglas oder (wässrige) Silika-Sole einsetzen. Durch Einsatz dieser Dispersionsmedien kann der Anteil an anorganischen Verbindungen im Verbundmaterial erhöht werden. Auch können dem Wasser Komponenten zugegeben werden, die die Benetzung der Aerogele verbessern. Das Eindringen von Wasser in die Poren des Gels ist in der Regel kein Problem, weil die Aerogele stark wasserabweisende Eigenschaften haben. Dem Wasser können Komponenten zugegeben werden, die die Benetzung der Aerogele verbessern.

Bei den Aerogelen oder Aerosilen handelt es sich vorzugsweise um pyrogene Kieselsäure. Diese können anorganisch, anorganisch-organisch oder organisch sein.

### Aerogel

Geeignete Aerogele für die erfindungsgemäßen Verbundmaterialien sind insbesondere solche auf Basis von Oxiden, insbesondere Siliziumdioxid und Metalloxiden, wie insbesondere Aluminium- Titan- und Zirkoniumoxid oder solche auf der Basis organischer Stoffe, wie zum Beispiel Melaminformaldehydkondensate (US-A-5,086,085), Resorcinformaldehyd-Kondensate (US-A-4,873,218) sowie Aerogele, die durch Polymerisation von Furfural mit phenolischen Novolak-Harzen herstellbar sind. Besonders geeignet sind Verbindungen, die für die Sol-Gel-Technik geeignet sind, siehe z. B. WO 97/10188 A1, Seite 7, erster Absatz, wie beispielsweise Si- oder AI-Verbindungen. Sie können aber auch auf Mischungen der oben genannten Materialien basieren. Bevorzugt verwendet werden Aerogele enthaltend Si-Verbindungen. Besonders bevorzugt sind Aerogele enthaltend SiO₂, insbesondere SiO₂-Aeroge, die gegebenenfalls organisch modifiziert sind.

Bevorzugte Aerogele weisen folgende Parameter auf:

| | |
|---|---|
| Porosität: | 50 bis 99 %, insbesondere 70 bis 99 %, besonders bevorzugt 80 bis 99 % |
| Dichte: | von 30 bis 300 g/L, bevorzugt ≤ 150 g/L |
| Partikeldurchmesser: | von 0,001 bis 100 mm, bevorzugt von 0,01 bis 10 mm (d₅₀) |
| Porendurchmesser: | 0,1 bis 500 nm, insbesondere < 200 nm, besonders bevorzugt < 100 nm, insbesondere 1 bis 100, bevorzugt 10 bis 50 nm |

Darüber hinaus gilt, dass die thermische Leitfähigkeit der Aerogele mit zunehmender Porosität und abnehmender Dichte abnimmt, und zwar bis zu einer Dichte im Bereich von 0,1 g/cm³. Die Wärmeleitfähigkeit des Aerogel-Granulates sollte vorzugsweise weniger als 40 mW/m*K, besonders bevorzugt weniger als 25 mW/m*K betragen.

Besonders bevorzugte Aerogele sind Silica-Aerogele, die im Wesentlichen aus amorphem Siliziumdioxid bestehen, aber abhängig von der Art ihrer Herstellung noch organische Verbindungen enthalten können.

Silica-Aerogel-Partikel können in bekannter Weise aus Wasserglaslösung über die Stufen Silica-Hydrogel, Lösungsmittelaustausch und anschließender überkritischer Trocknung hergestellt werden. Die in der Regel vorliegende Perlform ergibt sich hierbei durch das Versprühen eines schnell gelierenden Kieselsäuresols aus einer speziell konstruierten Düse und Gelierung der Tropfen im Fluge. Nähere Einzelheiten hierzu sind in der DE-A-21 03 243 beschrieben. Der Austausch von Hydrogelwasser gegen andere gegen Siliziumdioxid chemisch inerte Flüssigkeiten ist beispielsweise in US-A-2,093,454, US-A-3,977,993 sowie JP-A-53/025 295 beschrieben.

Die Aerogel-Partikel können in monomodaler, bimodaler oder multimodaler Verteilung eingesetzt werden.

In einer bevorzugten Ausführungsform weisen die Aerogel-Partikel hydrophobe Oberflächengruppen auf. Geeignete Gruppen zur dauerhaften Hydrophobisierung sind beispielsweise trisubstituierte Silylgruppen der allgemeinen Formel -Si(R)₃, vorzugsweise Trialkyl- und/oder Triarylsilylgruppen, wobei jedes R unabhängig ein nicht reaktiver, organischer Rest wie C₁-C₁₈-Alkyl oder C₆-C₁₄-Aryl, vorzugsweise C₁-C₆-Alkyl oder Phenyl, insbesondere Methyl, Ethyl, Cyclohexyl oder Phenyl ist, der zusätzlich noch mit funktionellen Gruppen substituiert sein kann. Besonders vorteilhaft zur dauerhaften Hydrophobisierung des Aerogels ist die Verwendung von Trimethylsilylgruppen. Die Einbringung dieser Gruppen kann durch Gasphasenreaktion zwischen dem Aerogel und beispielsweise einem aktivierten Trialkylsilan-Derivat, wie z. B. einem Chlortrialkylsilan oder einem Hexaalkyldisilazan, geschehen.

### Funktionalisierung der Aerogele

Die Aerogele können im Schaumstoff fixiert werden. Die Fixierung der Aerogele im Melaminharzschaumstoff kann durch Einführung von Reaktivgruppen in die Nanostruktur oder durch Einbringen geringer Mengen an Bindemitteln unterstützt werden.

Zur chemischen Funktionalisierung der Nanostruktur eignen sich beispielsweise funktionalisierte chemische Verbindungen wie Alkoxysilane, wie z. B. 3-Aminopropyltriethoxysilan oder 3-Aminopropyltrimethoxysilan. Diese Reaktivgruppen werden im ersten Schritt über die Silan-Einheit an das Aerogel gebunden und im 2. Schritt erlaubt die Aminogruppe eine chemische Anbindung an die auf der Oberfläche des Melaminharzschaumstoffs verbliebenen Reaktivgruppen.

Geeignete Systeme zur Funktionalisierung sind sehr ausführlich in der WO 2005103107 A1, Seite 9, Zeile 18 bis Seite 15, Zeile 4, beschrieben und sind in dieser Anmeldung ausdrücklich enthalten.

Als Bindemittel eignen sich polymere Stoffe beispielsweise Melamin-FormaldehydHarze. Geeignete Polyurethan-Harze, Polyesterharze oder Epoxidharze sind dem Fachmann bekannt. Solche Harze sind beispielsweise in Encyclopedia of Polymer Science und Technology (Wiley) unter folgenden Kapiteln zu finden: a) Polyesters, unsaturated: Edition 3, Vol. 11, 2004, S. 41-64; b) Polyurethanes: Edition 3, Vol. 4. 2003, S. 26-72 und c) Epoxy resins: Edition 3, Vol. 9, 2004, S. 678-804. Des Weiteren finden sich in Ullmann's Encyclopedia of Industrial Chemistry (Wiley) folgende Kapitel: a) Polyester resins, unsaturated: Edition 6, Vol. 28, 2003, S. 65-74; b) Polyurethanes: Edition 6, Vol. 28, 2003, S. 667-722 und c) Epoxy resins: Edition 6, Vol. 12, 2003, S. 285-303. Des Weiteren können amino- oder hydroxyfunktionalisierte Polymere, insbesondere ein Polyvinylamin oder Polyvinylalkohol eingesetzt werden. Beispiele auf Basis von Melamin- und Phenolharz sowie Acrylamid sind in EP 0451535B1 und DE 19649796A1 beschrieben.

Die Aerogele oder Aerosile können vor dem Imprägnierschritt oder direkt in der Schaumstruktur mit den Klebhilfsstoffen imprägniert werden.

Die Aerogel-Partikel können in monomodaler, bimodaler oder multimodaler Verteilung eingesetzt werden. In der Herstellung des Materials fallen Teilchen mit unterschiedlichen Größen an. Der Partikel-Diameter kann von 0,1 µm bis zu 100 mm variieren. Die Teilchen können nach Größe aufgeteilt werden durch Sieben mit unterschiedlichen Porengrößen. So können die Teilchen in so genannte Siebfraktionen separiert werden. Besonders bevorzugt sind Teilchen mit einem Durchmesser bis 10 mm.

Ein besonders bevorzugtes Aerogel ist das von der Firma Cabot Cooperation (Boston, USA) vertriebene Aerogel® TLD 302 auf Basis SiO₂ mit folgenden Eigenschaften laut Angaben des Produzenten:

| | |
|---|---|
| Wärmeleitfähigkeit: | 9 bis 20 mW/m*K |
| Porosität: | > 90 % |
| Schüttdichte | 65 - 85 kg/m³ |
| Partikeldichte | 120 - 180 kg/m³ |
| Porendurchmesser: | 10 bis 40 nm |
| Oberfläche: | ca. 600 - 800 m²/g |
| Partikeldurchmesser: | 7 µm bis 4 mm (d₅₀) |
| Oberflächeneigenschaft: | hydrophob |
| Opazität: | durchscheinend |

Ein besonders bevorzugtes Verbundmaterial ist dadurch gekennzeichnet, dass das Prepolymer erhältlich ist durch Umsetzung a) eines Isocyanates, vorzugsweise Diisocyanates mit b), wenigstens einem Polyol, wie in Anspruch 1 definiert, gegebenenfalls c) in Gegenwart eines Emulgierhilfsmittels oder Tensids.

In einer besonders bevorzugten Ausführungsform ist das Prepolymer erhältlich durch Umsetzung von jeweils wenigstens
a) einem Isocyanat, insbesondere Diisocyanat, insbesondere mit
   b1) einem Polyol B1, durch welches das Prepolymer ohne Tensid oder Emulsifizierungshilfsmittel in Wasser emulgierbar ist, oder
   b2) mit einem Polyol B2, durch welches das Prepolymer ohne Tensid oder Emulsifizierungshilfsmittel nicht wasseremulgierbar ist, wobei das Prepolymer mit einem Tensid oder Emulsifizierungshilfsmittel emulgiert wird, oder
   b3) mit einem Gemisch aus einem Polyol B1 und B2, vorzugsweise in einem Gewichtsverhältnis von 5 zu 95 bis 95 zu 5, insbesondere mit einer Menge B1, durch die das Prepolymer in Wasser emulgierbar ist.

In einer bevorzugten Ausführungsform ist das Polyol B1 ein Polyethylenglycol, insbesondere mit einem Molekulargewicht von 200 bis 6.000 g/mol, oder ein Polyethylenglycol, insbesondere mit einem Molekulargewicht von 200 bis 6.000 g/mol, und ein Alkylpolyethylenglykol mit einem Molekulargewicht von 200 bis 2000 g/mol.

In einer weiteren, besonders bevorzugten Ausführungsform ist das Polyol B2 ein Polypropylenglycol, ein Anlagerungsprodukt eines Alkylenoxids, insbesondere Propylenoxids an einen mehrwertigen Alkohol, insbesondere 1,2-Propandiol und Glycerin, ein Anlagerungsprodukt eines Alkylenoxids, insbesondere Propylenoxids, an wenigstens einen Starter mit einer Funktionalität Fn von 2 bis 8, oder ein Hydroxyl-Gruppen enthaltendes Glyzerid einer Fettsäure, bzw. eine Zusammensetzung, die im Wesentlichen ein derartiges Glyzerid enthält, wie insbesondere Rizinusöl.

In einer bevorzugten Ausführungsform werden als Emulgierhilfsmittel, bzw. Tenside, folgende Substanzen verwendet: Polyglykoside, Fettalkoholester, Polysiloxane, insbesondere mit Polyether-Gruppen modifizierte Polysiloxane, sowie silikonfreie Tenside und/oder Zusatzstoffe, die ionische Gruppen wie Carboxylate, Phosphate und Sulfate enthalten. Beispielsweise werden hier aufgeführt die von der BASF S.E. (Ludwigshafen, Deutschfand) vertriebenen Tenside, die vermarktet werden unter den Handelsnahmen: Lutensol®, Plurafac®, Pluronic®, Emulan®, Emulphor® und Lutensit®.

### Zusätzliche reaktive Komponenten

In einer Ausführungsform der Erfindung können bei der Reaktion der Isocyanat-Gruppen mit den Isocyanat-reaktiven Gruppen an sich bekannte Kettenverlängerungsmittel und/oder Vernetzer verwendet werden. Als Kettenverlängerungsmittel können beispielsweise Diole, vorzugsweise mit einem Molekulargewicht von 60 bis 490 g/mol eingesetzt werden, insbesondere Butandiol. In einer bevorzugten Ausführungsform wird die Reaktion des Isocyanats mit der Isocyanat-reaktiven Verbindung in Gegenwart einer Säure oder einer Säure abspaltenden Verbindung, insbesondere Diglycolbischlorformiat (DIBIS), durchgeführt. Weiterhin kann die Reaktion durch an sich bekannte Katalysatoren katalysiert werden, die aber in der Regel bei aromatischen Isocyanaten nicht notwendig sind. In einer Ausführung wird Wasserglas und/oder ein Silica Sol eingesetzt. Auf Grund seiner basischen Eigenschaften hat Wasserglas eine katalytische Wirkung.

### Additive

Der Verbundstoff kann in wirksamen Mengen weitere Zusatzstoffe wie z. B. Farbstoffe, Pigmente, Füllstoffe, Flammschutzmittel, Synergisten für Flammschutzmittel, Antistatica, Stabilisatoren, Weichmacher, Treibmittel, Tenside (z. B. Silicone) und IR-Trübungsmittel enthalten.

Zur Reduktion des Strahlungsbeitrags zur Wärmeleitfähigkeit kann das Verbundmaterial IR-Trübungsmittel wie zum Beispiel Ruß, Blähgraphit, Titandioxid, Eisenoxide oder Zirkondioxid sowie Mischungen derselben enthalten, was besonders für Anwendungen bei hohen Temperaturen vorteilhaft ist.

Im Hinblick auf die Rissbildung und Bruchfestigkeit kann es weiterhin vorteilhaft sein, wenn in dem Verbundmaterial Fasern enthalten sind. Als Fasermaterial können organische Fasern wie zum Beispiel Cellulose, Celluloseester, Polyacrylnitrile und Copolymere davon, sowie Polyacrylonitril, Polypropylen-, Polyester-, Nylon- oder Melaminformaldehydfasem und/oder anorganische Fasern, wie zum Beispiel Glas-, Mineral- sowie SiC-Fasem und/oder Kohlenstofffasem verwendet werden.

Die Brandklasse des nach der Trocknung erhaltenen Verbundmaterials wird durch die Brandklasse des Aerogels und des anorganischen Bindemittels sowie gegebenenfalls die des Fasermaterials bestimmt. Um eine möglichst günstige Brandklasse des Verbundmaterials zu erhalten (schwer entflammbar oder unbrennbar), sollten die Fasern aus nicht brennbarem Material, z. B. Mineral-, Glas- oder SiC-Fasern, bestehen.

Um eine Erhöhung der Wärmeleitfähigkeit durch die zugegebenen Fasern zu vermeiden, sollte
a) der Volumenanteil der Fasern 0,1 bis 30 %, vorzugsweise 1 bis 10 %, betragen, und
b) die Wärmeleitfähigkeit des Fasermaterials vorzugsweise < 1 W/m*K, sein.

Durch geeignete Wahl von Faserdurchmesser und/oder -material kann der Strahlungsbeitrag zur Wärmeleitfähigkeit reduziert und eine größere mechanische Festigkeit erzielt werden. Dazu sollte der Faserdurchmesser vorzugsweise im Bereich von 0,1 bis 30 µm liegen.

Der Strahlungsbeitrag zur Wärmeleitfähigkeit kann besonders reduziert werden, wenn Kohlenstofffasem oder kohlenstoffhaltige Fasern verwendet werden.

Die mechanische Festigkeit kann weiter durch Länge und Verteilung der Fasern im Verbundmaterial beeinflusst werden. Bevorzugt werden Fasern eingesetzt, deren Länge zwischen 0,5 und 10 cm liegt. Für plattenförmige Formkörper können auch Gewebe aus Fasern verwendet werden.

Weiterhin kann der Verbundstoff Zusatzstoffe enthalten, die zu seiner Herstellung benutzt werden, bzw. bei der Herstellung entstehen, so z. B. Gleitmittel zum Verpressen, wie Zinkstearat, oder die Reaktionsprodukte von sauren bzw. säureabspaltenden Härtungsbeschleunigem bei der Verwendung von Harzen.

Die Brandklasse des Verbundmaterials wird durch die Brandklasse des Aerogels, der Fasern und des Bindemittels sowie weiterer gegebenenfalls enthaltener Stoffe bestimmt. Um eine möglichst günstige Brandklasse des Verbundmaterials zu erhalten, sollten vorzugsweise nicht entflammbare Fasertypen, wie z. B. Glas- oder Mineralfasem, oder schwer entflammbare Fasertypen wie z. B. TREVIRA C® oder Melaminharzfasern, Aerogele auf anorganischer Basis, besonders bevorzugt auf der Basis von SiO₂, und schwer entflammbare Bindemittel wie z. B. anorganische Bindemittel oder Harnstoff- und Melaminformaldehydharze, Silikonharzklebstoffe, Polyimid- und Polybenzimidazolharze verwendet werden.

Des Weiteren kann das Verbundmaterial Flammschutzmittel als Zusatzstoff enthalten, wie z. B. Ammoniumpolyphosphat (APP), Aluminiumtrihydroxid oder andere geeignete Flammschutzmittel, die dem Fachmann bekannt sind.

### Verarbeitung

Wird das Material in Form von flächigen Gebilden, wie z. B. Platten oder Matten, verwendet, kann es auf mindestens einer Seite mit mindestens einer Deckschicht kaschiert sein, um die Eigenschaften der Oberfläche zu verbessern, so z. B. die Robustheit zu erhöhen, sie als Dampfsperre auszubilden oder gegen leichte Verschmutzbarkeit zu schützen. Die Deckschichten können auch die mechanische Stabilität des Verbundstoff-Formteils verbessern. Durch eine Beschichtung mit Deckschichten kann insbesondere auch verhindert werden, dass die erhaltenen Platten oder Matten staubig sind, was die Haftung in z. B. Fassadenelementen negativ beeinflussen könnte. Werden auf beiden Flächen Deckschichten verwendet, so können diese gleich oder verschieden sein.

Als Deckschichten eignen sich alle dem Fachmann bekannten Materialien. Sie können nicht-porös sein und damit als Dampfsperre wirken, wie z. B. Kunststofffolien, vorzugsweise Metallfolien oder metallisierte Kunststofffolien, die Wärmestrahlung reflektieren. Es können aber auch poröse Deckschichten verwendet werden, die ein Eindringen von Luft in das Material ermöglichen und damit zu einer besseren Schalldämpfung führen, wie z. B. poröse Folien, Papiere, Gewebe oder Vliese.

Die Oberfläche des Verbundmaterials kann auch mit einem Material beschichtet werden, um die Brennbarkeit zu reduzieren, z. B. mit einer Intumeszenz-Schicht.

Des Weiteren kann eine aufgebrachte Schicht die Haftung zu anderen Substraten wie z. B. Beton verbessern. Die Feuchtigkeitsaufnahme kann durch das Aufbringen einer geeigneten Schicht reduziert werden. Eine solche Schicht kann auch aus einem Reaktivsystem wie z. B. Epoxidharzen oder Polyurethanen bestehen, die ggf. durch Sprühen, Rakeln, Gießen oder Streichen o. ä. aufgebracht werden können.

Die Deckschichten können selbst auch aus mehreren Schichten bestehen. Die Deckschichten können mit dem Bindemittel befestigt sein, durch das die Fasern und die Aerogel-Partikel untereinander und miteinander verbunden sind, es kann aber auch ein anderer Kleber Verwendung finden.

Die Oberfläche des Verbundmaterials kann auch durch Einbringen mindestens eines geeigneten Materials in eine Oberflächenschicht geschlossen und verfestigt werden.

Als Materialien sind z. B. thermoplastische Polymere; wie z. B. Polymethylen und Polypropylen, oder Harze wie z. B. Melaminformaldehydharze geeignet.

Die erfindungsgemäßen Verbundmaterialien weisen Wärmeleitfähigkeiten zwischen 10 und 100 mW/m*K, vorzugsweise im Bereich von 10 bis 50 mW/m*K, besonders bevorzugt im Bereich von 13 bis 30 mW/m*K auf.

### Verwendung

Die erfindungsgemäßen Verbundmaterialien können aufgrund ihrer hervorragenden mechanischen Eigenschaften (beispielsweise erhöhte Bruchfestigkeit) und Wärmedämmeigenschaften (im Allgemeinen können Wärmeleitfähigkeiten von weniger als 0,025 W/m*K erreicht werden) auf den verschiedensten Gebieten eingesetzt werden.

Beispiele hierfür sind die Wärmedämmung von Gebäuden, Heizkesseln, Kühlgeräten, Backöfen (vgl. EP-A-0 475 285), Heizungsrohren, Fernheizleitungen, Flüssiggasbehältem, Nachtspeicheröfen sowie Vakuumisolierungen von technischen Geräten verschiedenster Art.

Insbesondere eignen sich die erfindungsgemäßen Verbundmaterialien zur Innendämmung, um einen Niedrigenergie-Standard zu erreichen, zur Außendämmung, gegebenenfalls in Kombination mit zementären und anorganischen Klebstoffen, sowie als Teil einer Kombination aus Grundputz, Amierungsmörtel und Oberputz, zur Dachdämmung, sowie in technischen Anwendungen in Kühlschränken, Transportboxen, SandwichBauteilen, Rohrdämmungen und technischen Schäumen.

### Beispiele

In den Beispielen und Vergleichsbeispielen wurden folgende Komponenten verwendet:

**Tabelle 1**

| Kurzbezeichnung | Zusammensetzung |
|---|---|
| Isocyanat 1 | Lupranat® M 50 von der BASF SE, Ludwigshafen, Deutschland, Polymer-MDI höherer Funktionalität und einer Viskosität von 500 cP, NCO = 31,5 % |
| Isocyanat 2 | Lupranat® M 200 R von der BASF SE, Ludwigshafen, Deutschland, Polymer-MDI höherer Funktionalität und einer Viskosität von 2000 cP, NCO = 31,0 % |
| Isocyanat 3 | Lupranat® M 20 von der BASF SE, Ludwigshafen, Deutschland, lösungsmittelfreies Produkt auf Basis von 4,4'-Diphenylmethandiisocyanat (MDI) mit höherfunktionellen Oligomeren und Isomeren, NCO = 31,5 % |
| Isocyanat 4 | Basonat® LR 9056 von der BASF SE, Ludwigshafen, Deutschland, wasseremulgierbares polyfunktionelles Isocyanat auf HDI-Basis für die Vernetzung von Polymerdispersionen, NCO = 18 % |
| Isocyanat 5 | Lupranat® MI von der BASF SE, Ludwigshafen, Deutschland, Gemisch aus 2,4'- und 4,4'-Diphenylmethan-diisocyanat (MDI), NCO = 33,5 % |
| Polyol 1 | Polypropylenglykol mit Mw = 2000 g/mol |
| Polyol 2 | Pluriol® A500E von der BASF SE, Ludwigshafen, Deutschland, Methylpolyethylenglykol, Mw = 500 g/mol |
| Polyol 3 | Polyethylenglykol mit Mw = 600 g/mol |
| Polyol 4 | Polyol hergestellt durch Anlagerung von Propylenoxid an Glyzerin mit Mw = 420 g/mol |
| Polyol 5 | Polyol hergestellt durch Anlagerung von Propylenoxid an Glyzerin mit Ethylenoxid Cap, Hydroxylzahl 35 mg KOH/g |
| Polyol 6 | Polyol hergestellt durch Anlagerung von Propylenoxid an eine Mischung aus Saccharose, Pentaerythritol und Diethylenglykol, Hydroxylzahl 405 mg KOH/g, Funktionalität 3,9 |
| Polyol 7 | Polypropylenglykol mit Mw = 1000 g/mol |
| Polyol 8 | Polyoxypropylentriol mit Mw = 1000 g/mol |
| Polyol 9 | Rectapur-Rizinusöl von der VWR International, Hydroxylzahl 179 mg KOH/g |
| Stabilisator 1 | Silbyk® 9204 von BYK-Chemie GmbH, Wesel, Deutschland, Polyether modifiziertes Polysiloxan |
| Stabilisator 2 | 1 mol Nonylphenol mit 9 mol Ethylenoxid |
| Stabilisator 3 | Dabco® DC 193, Polysiloxan Silikon von Air Products GmbH, Hattingen, Deutschland |
| Stabilisator 4 | Tegostab® B 8404, Polyether modifiziertes Polysiloxan von Evonik Goldschmidt GmbH, Essen, Deutschland |
| Stabilisator 5 | Dabco® LK443E (silikonfreies Tensid) von Air Products GmbH, Hattingen, Deutschland |
| Katalysator 1 | Jeffcat® ZR 70 von Huntsman Polyurethanes, Everberg, Belgien, 2-(2-dimethylaminoethoxy)ethanol |
| Katalysator 2 | Dabco® 33 LV, Diazabicycloktan 33% in Dipropylenglykol von Air Products GmbH, Hattingen, Deutschland |
| Katalysator 3 | Dabco® DMEA, Dimethylethanolamin von Air Products GmbH, Hattingen, Deutschland |
| Katalysator 4 | Dabco® BL 11, Bis(dimethylamino-ethyl)ether 70% in Dipropylenglykol von Air Products GmbH, Hattingen, Deutschland |
| Katalysator 5 | N,N-Dimethylcyclohexylamin von der BASF SE, Ludwigshafen, Deutschland |
| Katalysator 6 | Lupragen® N600, N,N',N"-Trisdimethylaminopropylhexahydrotriazin von der BASF SE, Ludwigshafen, Deutschland |
| Wasserglas | Na-Wasserglas Modul 2,6-3,2, Feststoffgehalt 43,5 % von van Baerle AG, Münchenstein, Schweiz |
| Aerogel | Cabot Nanogel® TLD 302 amorphe Kieselsäure mit einem PartikelDurchmesser von 1,2 bis 4 mm, einem Porendurchmesser von ca. 20 mm und einer Porosität > 90 |

### Beispiel 1:

In einem mit einem Rührer ausgestattetem 1 L Glaskolben wurden 289,5 g Isocyanat 1 unter konstantem Rühren auf 60 °C erwärmt und mit 0,05 g Diglycol-bis-Chlorformiat (DIBIS) versetzt. Anschließend wurde ein Gemisch aus 195,5 g Polyol 1 und 15 g Polyol 2 langsam zudosiert. Die Temperatur wurde für 4 h bei 80 °C konstant gehalten. Es wurden 500 g eines klaren Prepolymers mit einem NCO-Gehalt von 16 % erhalten. 160 g des Isocyanat-Prepolymers wurden mit 160 g Wasser zu einer dünnflüssigen, milchigen, homogenen Emulsion verrührt. Diese Emulsion wurde durch Rühren mit einem Flügelrührer mit 80 g Aerogel vermischt. Die so erhaltene Masse wurde in eine auf 50 °C beheizte Metallform gegeben, die mit einer dünnen Polyethylen-Folie ausgelegt war. Die Form hat die Abmessungen 20 cm x 20 cm x 2 cm und einen beweglichen Deckel, mit dem sie sich verschließen lässt. Beim Schließen des Deckels wurde überschüssige Emulsion herausgepresst. Nach einer Stunde wurde das Komposit-Material aus der Form entnommen und über Nacht bei 60 °C in einem Heizschrank gelagert. Im weiteren Verlauf wurde die Platte bis zur Massenkonstanz bei 80 °C getrocknet. An der Platte wurden physikalische Messungen durchgeführt, deren Ergebnisse in Tabelle 2 zusammengefasst sind.

### Beispiel 2:

In einem mit einem Rührer ausgestattetem 1 L Glaskolben wurden 289,5 g Isocyanat 2 unter konstantem Rühren auf 60 °C erwärmt und mit 0,05 g Diglycol-bis-Chlorformiat (DIBIS) versetzt. Anschließend wurde ein Gemisch aus 195,5 g Polyol 1 und 15 g Polyol 2 langsam zudosiert. Die Temperatur wurde für 4 h bei 80 °C konstant gehalten. Es wurden 500 g eines leicht trüben Prepolymers mit einem NCO-Gehalt von 16 % erhalten. 96 g des Isocyanat-Prepolymers wurden mit 224 g Wasser zu einer milchigen, homogenen Emulsion verrührt. Diese Emulsion wurde durch Rühren mit einem Flügelrührer mit 80 g Aerogel vermischt. Die so erhaltene Masse wurde in-eine auf 50 °C beheizte Metallform gegeben, die mit einer dünnen Polyethylen-Folie ausgelegt war. Die Form hat die Abmessungen 20 cm x 20 cm x 2 cm und einen beweglichen Deckel, mit dem sie sich verschließen lässt. Beim Schließen des Deckels wurde überschüssige Emulsion herausgepresst. Nach einer Stunde wurde das Komposit-Material aus der Form entnommen und über Nacht bei 60 °C in einem Heizschrank gelagert. Im weiteren Verlauf wurde die Platte bis zur Massenkonstanz bei 80 °C getrocknet. An der Platte wurden physikalische Messungen durchgeführt, deren Ergebnisse in Tabelle 2 zusammengefasst sind.

### Beispiel 3:

In einem mit einem Rührer ausgestattetem 1 L Glaskolben wurden 293,8 g Isocyanat 2 unter konstantem Rühren auf 60 °C erwärmt und mit 0,05 g Diglycol-bis-Chlorformiat (DIBIS) versetzt. Anschließend wurde ein Gemisch aus 156,2 g Polyol 1 und 50 g Polyol 2 langsam zudosiert. Die Temperatur wurde für 4 h bei 80 °C konstant gehalten. Es wurden 500 g eines klaren Prepolymers mit einem NCO-Gehalt von 16 % erhalten. 22 g des Isocyanat-Prepolymers wurden mit 22 g Wasser zu einer milchigen, homogenen Emulsion verrührt. Diese Emulsion wurde durch Rühren mit einem Flügelrührer mit 88 g Aerogel vermischt. Die so erhaltene Masse wurde in eine auf 60 °C beheizte Metallform gegeben, die mit einer dünnen Polyethylen-Folie ausgelegt war. Die Form hat die Abmessungen 20 cm x 20 cm x 2 cm und einen abnehmbaren Deckel, mit dem sie sich verschließen lässt. Nach einer Stunde wurde das Komposit-Material aus der Form entnommen und über Nacht bei 60 °C in einem Heizschrank gelagert. Im weiteren Verlauf wurde die Platte bis zur Massenkonstanz bei 80 °C getrocknet. An der Platte wurden physikalische Messungen durchgeführt, deren Ergebnisse in Tabelle 2 zusammengefasst sind.

### Beispiel 4:

In einem mit einem Rührer ausgestattetem 1 L Glaskolben wurden 293,8 g Isocyanat 2 unter konstantem Rühren auf 60 °C erwärmt und mit 0,05 g Diglycol-bis-Chlorformiat (DIBIS) versetzt. Anschließend wurde ein Gemisch aus 156,2 g Polyol 1 und 50 g Polyol 2 langsam zudosiert. Die Temperatur wurde für 4 h bei 80 °C konstant gehalten. Es wurden 500 g eines klaren Prepolymers mit einem NCO-Gehalt von 16 % erhalten. 25 g des Isocyanat-Prepolymers wurden mit 75 g Wasser zu einer milchigen, homogenen Emulsion verrührt. Diese Emulsion wurde durch Rühren mit einem Flügelrührer mit 100 g Aerogel vermischt. Die so erhaltene Masse wurde in eine auf 60 °C beheizte Metallform gegeben, die mit einer dünnen Polyethylen-Folie ausgelegt war. Die Form hat die Abmessungen 20 cm x 20 cm x 2 cm und einen abnehmbaren Deckel, mit dem sie sich verschließen lässt. Nach einer Stunde wurde das Komposit-Material aus der Form entnommen und über Nacht bei 60 °C in einem Heizschrank gelagert. Im weiteren Verlauf wurde die Platte bis zur Massenkonstanz bei 80 °C getrocknet. An der Platte wurden physikalische Messungen durchgeführt, deren Ergebnisse in Tabelle 2 zusammengefasst sind.

### Beispiel 5:

In einem mit einem Rührer ausgestattetem 3L Glaskolben wurden 1520 g Isocyanat 2 unter konstantem Rühren auf 60 °C erwärmt und mit 0,1 g Diglycol-bis-Chlorformiat (DIBIS) versetzt. Anschließend wurde ein Gemisch aus 433 g Polyol 3 und 47 g Polyol 2 langsam zudosiert. Das Prepolymer wies einen NCO-Gehalt von 20,2 % und eine Viskosität von 9370 mPas bei 23 °C auf. 96,3 g des so erhaltenen Prepolymers wurden für 20 s bei 900 rpm mit 4,8 g Stabilisator 1 verrührt. 300 g Wasser wurden zugegeben und es wurde erneut für 20 s bei 900 rpm gerührt. 150 g Aerogel wurden hinzugefügt und für 2 min mit einem Spatel untergemischt. Die Masse wurde in eine Form gepresst, diese verschlossen und für 70 min bei 50 °C gelagert. Die Platte aus dem Komposit-Material wurde aus der Form genommen und für 15 h bei 50 °C getrocknet. An der Platte wurden physikalische Messungen durchgeführt, deren Ergebnisse in Tabelle 2 zusammengefasst sind.

### Beispiel 6:

Ein Prepolymer mit einem NCO-Gehalt von 13,9 % wurde durch die Reaktion von 226 g Isocyanat 4 mit 24 g Polyol 3 in Anwesenheit von 45 mg Dibutylzinndilaurat hergestellt. 24,6 g des so erhaltenen Prepolymers wurden für 20 s bei 900 rpm mit 1,4 g Stabilisator 1 verrührt. 78,5 g Wasser wurden mit 3,5 g Wasserglas und 30 mg Katalysator 1 gemischt und für 5 min bei 900 rpm gerührt. Beide so erhaltenen Komponenten wurden für 30 s bei 900 rpm miteinander vermischt. 82 g Aerogel wurden hinzugefügt und mit einem Spatel untergemischt. Die Masse wurde für 30 s mit einem Handrührgerät Braun Multimix M 830 Trio bei ca. 630 rpm gemischt und anschließend leicht in eine nach oben offene Form (23 cm x 23 cm) gepresst und für 16 h bei 50 °C getrocknet. An der Platte wurden physikalische Messungen durchgeführt, deren Ergebnisse in Tabelle 2 zusammengefasst sind.

### Beispiel 7:

In einem mit einem Rührer ausgestattetem 1 L Glaskolben wurden 934,5 g Isocyanat 1 unter konstantem Rühren auf 60 °C erwärmt. Anschließend wurde 65,5 g Polyol 8 langsam zudosiert. Das Prepolymer hat einen NCO-Gehalt von 28 % und einer Viskosität von 670 mPas bei 25 °C.

79,84 g des so erhaltenen Prepolymers wurden mit 7,97 g Stabilisator 1.149,56 g Wasserglas und 206,52 g Wasser, für 20 s mit einem Handrührgerät Braun Multimix M 830 Trio bei ca. 900 rpm verrührt.

133,79 g Aerogel wurden hinzugefügt und für 1 min mit einem Handrührgerät Braun Multimix M 830 Trio bei ca. 650 rpm verrührt Die Masse wurde in eine Form gepresst, diese verschlossen und für 70 min bei 50 °C gelagert. Die Platte aus dem Komposit-Material wurde aus der Form genommen und für 24 h bei 50 °C getrocknet. An der Platte wurden physikalische Messungen durchgeführt, deren Ergebnisse in Tabelle 2 zusammengefasst sind.

### Beispiel 8:

Ein Prepolymer mit einem NCO-Gehalt von 23 % wurde durch die Reaktion von 820 g Isocyanat 1 mit 180 g Polyol 9 hergestellt.

148,5 g des so erhaltenen Prepolymers wurden mit 14,86 g Stabilisator 5 und 488,38 g Wasserglas 1 für 20 s mit einem Handrührgerät Braun Multimix M 830 Trio bei ca. 900 rpm verrührt.

248,82 g Aerogel wurden hinzugefügt und für 1 min mit einem Handrührgerät Braun Multimix M 830 Trio bei ca. 650 rpm verrührt Die Masse wurde in eine Form gepresst, diese verschlossen und für 70 min bei 50 °C gelagert. Die Platte aus dem Komposit-Material wurde aus der Form genommen und für 24 h bei 80 °C getrocknet. An der Platte wurden physikalische Messungen durchgeführt, deren Ergebnisse in Tabelle 2 zusammengefasst sind.

**Tabelle 2 Der Massenanteil Aerogel wurde berechnet als Quotient aus der Masse des in die Form eingewogenen Aerogels und der Gesamtmasse des trockenen Verbundmaterials.**

| | Einheit | B1 | B2 | B3 | B4 | B5 | B6 | B7 | B8 |
|---|---|---|---|---|---|---|---|---|---|
| Massenanteil Aerogel | % | 54,0 | 51,0 | 82,0 | 82,0 | n.g. | 72,0 | 52,0 | n.g. |
| Raumgewicht Kern | kg/m3 | 186,7 | 208,7 | 131,6 | 149,5 | 132,0 | 116,0 | 200,3 | 180,0 |
| Druckfestigkeit/-spannung bei 10 % Stauchung | N/mm² | 0,145 | 0,278 | n.g. | n.g. | n.g. | n.g. | n.g. | n.g. |
| E-Modul | N/mm² | 2,41 | 5,14 | n.g. | n.g. | n.g. | n.g. | n.g. | n.g. |
| Biegefestigkeit/-spannung | N/mm² | 0,11 | 0,27 | n.g. | n.g. | n.g. | n.g. | n.g. | n.g. |
| Durchbiegung | mm | 1,6 | 1,9 | n.g. | n.g. | n.g. | n.g. | n.g. | n.g. |
| Wärmeleitfähigkeit | mW/m*K | 28,9 | 24,3 | 19,3 | 20,1 | 21,6 | 20,6 | 27,8 | 25,3 |
| n.g. bedeutet nicht gemessen | | | | | | | | | |

### III. Vergleichsbeispiele

### Vergleichsbeispiel 1:

Zu Aerogel wurden verschiedene organische Lösungsmittel gegeben (Methanol, Ethanol, 2-Propanol, Aceton und Hexan). Man beobachtete stets ein Volllaufen der Partikel mit dem jeweiligen Lösungsmittel. Dasselbe wurde beobachtet, wenn man auf Propylenoxid und Ethylenoxid in unterschiedlichen Verhältnissen basierte Polyole mit unterschiedlichen Startermolekülen zugab. Lediglich Wasser ist aufgrund der starken Hydrophobizität der Partikel nicht in der Lage, in diese einzudringen.

### Vergleichsbeispiel 2:

148,4 g Polyol 4 wurden mit 0,4 g Katalysator 2 gemischt und anschließend mit einer Mischung aus 83,5 g Isocyanat 5 und 55,7 g Isocyanat 3 für 1 min bei 2000 rpm in einem Speedmixer® verrührt. Dieses Reaktivsystem wurde mit einem Spatel mit 40 g Aerogel vermischt und in eine auf 45 °C beheizte Form mit den Dimensionen 20 cm x 20 cm x 1 cm gepresst. Nach 30 min wurde die noch weiche Platte entformt und über Nacht bei Raumtemperatur ausgehärtet. Man erhielt ein sehr hartes Material, bei dem die Nanogel Partikel mit Polyurethan gefüllt waren, so dass ein nahezu kompaktes Material mit einer Dichte nahe 1000 g/L und einer Wärmeleitfähigkeit erhalten wurde, die zu groß war, um mit der für geschäumte Materialien üblichen Methode bestimmt zu werden, in jedem Fall aber über 80 mW/m*K.

### Vergleichsbeispiel 3:

Es wurde versucht, ein Komposit-Material aus Aerogel und einem typischen Polyurethan-Hartschaum-Reaktivsystem gemäß den unten angegebenen Varianten a) - c) herzustellen, wobei das Polyurethan-Reaktivsystem folgende Zusammensetzung aufwies (Angabe in Gewichtsteilen):

| | | |
|---|---|---|
| Komponente A: | Polyol 6: | 61,4 |
| | Polyol 7: | 31,7 |
| | Stabilisator 4: | 2,01 |
| | Wasser: | 4,77 |
| | Katalysator 4: | 0,03 |
| | Katalysator 5: | 0,10 |
| | Katalysator 6: | 0,05 |
| Komponente B: | 100 % Isocyanat 3 | |

Mischungsverhältnis: 100 Gewichtsteile A zu 162 Gewichtsteilen B

| Variante | Verfahren |
|---|---|
| a) | Eine Form wurde mit Aerogel und anschließend mit dem obigen flüssigen Polyurethan-Reaktivsystem ausgefüllt. |
| b) | Das Aerogel wurde in eine Form gegeben, in welcher das obige flüssige Polyurethan-Reaktivsystem gerade im Aufschäumen begriffen war. |
| c) | Aerogel wurde mit obigem flüssigem Polyurethan-Reaktivsystem gemischt und dieses Gemisch anschließend in eine geschlossene Form gegeben. |

Man erhielt in allen Varianten a) bis c) kaum mit Schaum benetzte, völlig unverklebte Nanogel-Partikel, die vom aufschäumenden Polyurethan komprimiert, aber nicht durchdrungen oder gar verklebt waren. Es wurde somit in keinem dieser Fälle ein verwertbares Komposit-Material erhalten.

### Vergleichsbeispiel 3 d):

Ein Gemisch aus 10,4 g Polyol 5; 3,2 g Polyol 6; 2,4 g Stabilisator 2; 3,2 g Wasser; 0,16 g Stabilisator 3; 0,32 g Katalysator 3 und 0,046 g Katalysator 4 wurden mit 19,2 g Isocyanat 3 vermischt und in eine Form mit den Dimensionen 20 cm x 20 cm x 4 cm gegeben, die mit 128 g Aerogel randvoll gefüllt war. Nach 10 min erhielt man eine dünne Schicht Polyurethan-Schaum einer sehr hohen Dichte, die lose auf dem Nanogel auflag, da er dieses nicht durchdringen konnte. Nur sehr wenige Partikel hafteten schwach am Polyurethan.

Die Vergleichsbeispiele zeigen, dass die Haftung von Polyurethan-Schaum am Aerogel zu gering ist, um ein Komposit-Material zu erhalten. Bringt man dagegen flüssige organische Reaktionskomponenten mit dem Nanogel in Kontakt, so laufen die Partikel damit voll, wodurch die besonderen Eigenschaften des Nanogels bezüglich Dichte und Wärmeleitfähigkeit verloren gehen.

Überraschenderweise wird durch die Nutzung von Emulsionen von Prepolymeren in Wasser das Eindringen der Polyurethan-Komponenten in die Nanogel-Partikel verhindert.

## Patentansprüche

1. Verbundmaterial, enthaltend einen Binder und ein Aerogel oder Aerosil, **dadurch gekennzeichnet, dass** der Binder das Reaktionsprodukt eines wasseremulgierbaren Polyurethan-basierten Prepolymers, das freie Isocyanat-Gruppen aufweist, mit einem wässrigen System, insbesondere Wasser, ist, wobei das Prepolymer erhältlich ist durch Umsetzung a) eines Isocyanates, vorzugsweise Diisocyanates, mit b) wenigstens einem Polyol ausgewählt aus Polyesterolen, Polyetherolen, Polyetheraminen und/oder Polycarbonatdiolen mit einem zahlenmittleren Molekulargewicht (Mn) von 106 bis 12.000 g/mol und einem Hydroxyl-Wert von 14 bis 1.839 mg KOH/g und einer Funktionalität von 2 bis 8, gegebenenfalls c) in Gegenwart eines Emulsifizierungshilfsmittels oder Tensids.

2. Verbundmaterial nach Anspruch 1, **dadurch gekennzeichnet, dass** das Prepolymer erhältlich ist durch Umsetzung von jeweils wenigstens
a) einem Isocyanat mit
b1) einem Polyol B1, durch welches das Prepolymer ohne Emulsifizierungshilfsmittel wasseremulgierbar ist, oder
b2) mit einem Polyol B2, durch welches das Prepolymer ohne Tensid oder Emulsifizierungshilfsmittel nicht wasseremulgierbar ist, wobei das Prepolymer mit einem Tensid oder Emulsfizierungshilfsmittel emulgiert wird, oder
b3) mit einem Gemisch aus einem Polyol B1 und B2, vorzugsweise in einem Gewichtsverhältnis von 5 zu 95 bis 95 zu 5, insbesondere mit einer Menge B1, durch die das Prepolymer in Wasser emulgierbar ist.

3. Verbundmaterial nach wenigstens einem der vorhergehenden Ansprüche, **dadurch gekennzeichnet, dass** das Polyol ein Polyethylenglycol mit einem Molekulargewicht (Mn) von 200 bis 6.000 g/mol oder ein Polyethylenglycol mit einem Molekulargewicht (Mₙ) von 200 bis 6000 g/mol und ein Alkylpolyethylenglykol mit einem Molekulargewicht von 200 bis 2000 ist.

4. Verbundmaterial nach wenigstens einem der vorhergehenden Ansprüche, **dadurch gekennzeichnet, dass** das Polyol ein Polypropylenglykol oder Polybutylenglykol, ein Anlagerungsprodukt eines Alkylen-, insbesondere Propylenoxids oder Butylenoxids an einen mehrwertigen Alkohol, ein Anlagerungsprodukt eines Alkylen-, insbesondere Propylenoxids, an einem Starter mit Fn von 2-8, oder ein Hydroxyl-Gruppen enthaltendes Glyzerid einer Fettsäure ist.

5. Verbundmaterial nach Anspruch 1, **dadurch gekennzeichnet, dass** als Tensid oder Emulsifizierungshilfsmittel verwendet werden: ein Polyether-modifiziertes Siloxan, oder ein silikonfreies Tensid.

6. Verbundmaterial gemäß wenigstens einem der vorhergehenden Ansprüche, **dadurch gekennzeichnet, dass** das Isocyanat ein aromatisches Isocyanat, insbesondere MDI oder ein polymeres MDI, ist

7. Verbundmaterial gemäß wenigstens einem der vorhergehenden Ansprüche. **dadurch gekennzeichnet, dass** das Isocyanat ein aliphatisches Isocyanat, insbesondere HDI oder ein polymeres HDI, ist.

8. Verbundmaterial gemäß wenigstens einem der vorhergehenden Anspruche, **dadurch gekennzeichnet, dass** als Isocyanat-reaktive Verbindung ein Gemisch aus wenigstens einem Polyalkylenglykol und einem alkoxylierten Polyalkylenglykol eingesetzt wird.

9. Verbundmaterial gemäß wenigstens einem der vorhergehenden Ansprüche, **dadurch gekennzeichnet, dass** die Partikel gegebenenfalls organisch modifizierte SiO₂-Aerogele sind.

10. Verbundmaterial gemäß Anspruch 9, **dadurch gekennzeichnet, dass** das Aerogel hydrophob modifiziert ist.

11. Verbundmaterial gemäß wenigstens einem der vorhergehenden Ansprüche, **dadurch gekennzeichnet, dass** das Verbundmaterial in Form einer beschichteten Platte oder eines beschichteten Vlieses, vorliegt, und/oder dass das Verbundmaterial eine Wärmeleitfähigkeit von 13 bis 30 mW/mK aufweist, und/oder dass die Oberfläche des Verbundmaterials mit einem Coating beschichtet ist, und/oder dass die Oberfläche des Verbundmaterials kaschiert ist.

12. Zusammensetzung zur Herstellung eines Verbundmaterials gemäß wenigstens einem der vorhergehenden Ansprüche, enthaltend ein Aerogel oder Aerosil, ein isocyanat-Gruppen-haltiges Prepolymer und Wasserglas.

13. Verfahren zur Herstellung eines Verbundmaterials gemäß wenigstens einem der vorhergehenden Ansprüche, **dadurch gekennzeichnet, dass** man ein Prepolymer, welches isocyanat-Gruppen aufweist, unter Zugabe von Wasser mit einem Aerogel oder Aerosil vermischt unter Reaktion des Prepolymers mit dem zugesetzten Wasser.

14. Verwendung eines Verbundmaterials gemäß wenigstens einem der vorhergehenden Ansprüche zur Wärme- oder Schalldämmung.

## Claims

1. A composite material comprising a binder and an aerogel or aerosil, wherein the binder is the reaction product of a water-emulsifiable polyurethane-based prepolymer having free isocyanate groups with an aqueous system, more particularly water, where the prepolymer is obtainable by reacting a) an isocyanate, preferably a diisocyanate, with b) at least a polyol selected from polyesterols, polyetherols, polyether amines and/or polycarbonate diols with a number average molecular weight (Mn) of 106 to 12000 g/mol and a hydroxyl value of 14 to 1.839 mg KOH/g and a functionality of 2 to 8, optionally c) in the presence of an emulsification auxiliary or of a surfactant.

2. The composite material according to claim 1 wherein the prepolymer is obtainable by reaction of in each case at least
a) an isocyanate with
b1) a polyol B1 whereby the prepolymer is water emulsifiable without emulsification auxiliary, or
b2) with a polyol B2 whereby the prepolymer is not water emulsifiable without surfactant or emulsification auxiliary, in which case the prepolymer is emulsified with a surfactant or emulsification auxiliary, or
b3) with a mixture of a polyol B1 and B2, preferably in a weight ratio ranging from 5:95 to 95:5, more particularly with an amount of B1 whereby the prepolymer is emulsifiable in water.

3. The composite material according to at least one of the preceding claims wherein the polyol is a polyethylene glycol having a molecular weight (Mn) of 200 to 6000 g/mol or a polyethylene glycol having a molecular weight (Mn) of 200 to 6000 g/mol and an alkylpolyethylene glycol having a molecular weight of 200 to 2000.

4. The composite material according to at least one of the preceding claims wherein the polyol is a polypropylene glycol or polybutylene glycol, an addition product of an alkylene oxide and more particularly propylene oxide or butylene oxide onto a polyhydric alcohol, an addition product of an alkylene oxide and more particularly propylene oxide onto a starter molecule of Fn 2-8, or a hydroxyl-containing glyceride of a fatty acid.

5. The composite material according to claim 1 wherein the surfactant or emulsification auxiliary used are a polyether-modified siloxane or a silicone-free surfactant.

6. The composite material according to at least one of the preceding claims wherein the isocyanate is an aromatic isocyanate, more particularly MDI or a polymeric MDI.

7. The composite material according to at least one of the preceding claims wherein the isocyanate is an aliphatic isocyanate, more particular HDI or a polymeric HDI.

8. The composite material according to at least one of the preceding claims wherein the isocyanate-reactive compound used is a mixture of at least a polyalkylene glycol and an alkoxylated polyalkylene glycol.

9. The composite material according to at least one of the preceding claims wherein the particles are optionally organomodified SiO₂ aerogels.

10. The composite material according to claim 9 wherein the modified aerogel is hydrophobic.

11. The composite material according to at least one of the preceding claims wherein the composite material is present in the form of a coated plate or of a coated fibrous nonwoven web, and/or wherein the composite material has a thermal conductivity of 13 to 30 mW/mK and/or wherein the surface of the composite material is coated with a coating, and/or wherein the surface of the composite material is laminated.

12. A composition for producing a composite material according to at least one of the preceding claims, comprising an aerogel or aerosil, a prepolymer comprising isocyanate groups and waterglass.

13. A process for producing a composite material according to at least one of the preceding claims which comprises mixing a prepolymer having isocyanate groups with an aerogel or aerosil in the presence of added water to react the prepolymer with the added water.

14. The use of a composite material according to at least one of the preceding claims for thermal or acoustical insulation.

## Revendications

1. Matériau composite, contenant un liant et un aérogel ou un aérosil, **caractérisé en ce que** le liant est le produit de réaction d'un prépolymère à base de polyuréthane émulsifiable dans l'eau, qui comprend des groupes isocyanate libres, avec un système aqueux, notamment de l'eau, le prépolymère pouvant être obtenu par mise en réaction de a) un isocyanate, de préférence un diisocyanate, avec b) au moins un polyol choisi parmi les polyesterols, les polyétherols, les polyéther-amines et/ou les polycarbonate-diols ayant un poids moléculaire moyen en nombre (Mn) de 106 à 12 000 g/mol et un indice hydroxyle de 14 à 1 839 mg KOH/g et une fonctionnalité de 2 à 8, éventuellement c) en présence d'un adjuvant d'émulsification ou d'un tensioactif.

2. Matériau composite selon la revendication 1, **caractérisé en ce que** le prépolymère peut être obtenu par mise en réaction à chaque fois d'au moins
a) un isocyanate avec
b1) un polyol B1, grâce auquel le prépolymère est émulsifiable dans l'eau sans adjuvant d'émulsification, ou
b2) avec un polyol B2, grâce auquel le prépolymère n'est pas émulsifiable dans l'eau sans tensioactif ou adjuvant d'émulsification, le prépolymère étant émulsifié avec un tensioactif ou un adjuvant d'émulsification, ou
b3) avec un mélange d'un polyol B1 et B2, de préférence en un rapport de mélange allant de 5 sur 95 à 95 sur 5, notamment avec une quantité de B1 grâce à laquelle le prépolymère est émulsifiable dans l'eau.

3. Matériau composite selon au moins l'une quelconque des revendications précédentes, **caractérisé en ce que** le polyol est un polyéthylène glycol d'un poids moléculaire (Mn) de 200 à 6 000 g/mol ou un polyéthylène glycol d'un poids moléculaire (Mn) de 200 à 6 000 g/mol et un alkylpolyéthylène glycol d'un poids moléculaire de 200 à 2 000.

4. Matériau composite selon au moins l'une quelconque des revendications précédentes, **caractérisé en ce que** le polyol est un polypropylène glycol ou un polybutylène glycol, un produit d'addition d'un oxyde d'alkylène, notamment de propylène ou de butylène, sur un alcool polyvalent, un produit d'addition d'un oxyde d'alkylène, notamment de propylène, sur un démarreur ayant une Fn de 2 à 8, ou un glycéride d'un acide gras contenant des groupes hydroxyle.

5. Matériau composite selon la revendication 1, **caractérisé en ce qu'**un siloxane modifié par un polyéther ou un tensioactif sans silicone est utilisé en tant que tensioactif ou adjuvant d'émulsification.

6. Matériau composite selon au moins l'une quelconque des revendications précédentes, **caractérisé en ce que** l'isocyanate est un isocyanate aromatique, notamment le MDI ou un MDI polymère.

7. Matériau composite selon au moins l'une quelconque des revendications précédentes, **caractérisé en ce que** l'isocyanate est un isocyanate aliphatique, notamment l'HDI ou un HDI polymère.

8. Matériau composite selon au moins l'une quelconque des revendications précédentes, **caractérisé en ce qu'**un mélange d'au moins un polyalkylène glycol et d'un polyalkylène glycol alcoxylé est utilisé en tant que composé réactif avec les isocyanates.

9. Matériau composite selon au moins l'une quelconque des revendications précédentes, **caractérisé en ce que** les particules sont des aérogels de SiO₂ éventuellement modifiés organiquement.

10. Matériau composite selon la revendication 9, **caractérisé en ce que** l'aérogel est modifié hydrophobiquement.

11. Matériau composite selon au moins l'une quelconque des revendications précédentes, **caractérisé en ce que** le matériau composite se présente sous la forme d'une plaque revêtue ou d'un non-tissé revêtu et/ou **en ce que** le matériau composite présente une conductivité thermique de 13 à 30 mW/wK et/ou **en ce que** la surface du matériau composite est revêtue avec un revêtement et/ou **en ce que** la surface du matériau composite est doublée.

12. Composition pour la fabrication d'un matériau composite selon au moins l'une quelconque des revendications précédentes, contenant un aérogel ou un aérosil, un prépolymère contenant des groupes isocyanate et un verre soluble.

13. Procédé de fabrication d'un matériau composite selon au moins l'une quelconque des revendications précédentes, **caractérisé en ce qu'**un prépolymère, qui comprend des groupes isocyanate, est mélangé avec un aérogel ou un aérosil avec ajout d'eau, le prépolymère réagissant avec l'eau ajoutée.

14. Utilisation d'un matériau composite selon au moins l'une quelconque des revendications précédentes pour l'isolation thermique ou acoustique.
